# EUROPEAN PATENT APPLICATION

(11) **EP 4 545 540 A1**
(43) Date of publication of application: **30.04.2025**
(21) Application number: 23205756.2
(22) Date of filing: 25.10.2023
(51) Int. Cl.: C07F 13/00, H01M 8/00

(54) **TRANSITION METAL CLUSTER COMPOUNDS FOR ELECTROCHEMICAL APPLICATIONS**

(71) Applicant: Litricity GmbH, 83026 Rosenheim (DE)
(72) Inventor: Stimming, Ulrich, 83080 Oberaudorf (DE); Guilherme Machado de Carvalho, João, 80336 München (DE); Hess Frieling, Kristopher Manuel, 81369 München (DE)
(74) Representative: Sonnenhauser, Thomas Martin

(57) **Abstract**

The present invention refers to novel cluster compounds particularly suitable for electrochemical applications as well the synthesis and use thereof in redox flow batteries, photocatalysis and medical applications. The cluster compounds of the present invention comprise a charged or non-charged complex as well as an optional plurality of counterions and provide high charge densities in aqueous electrolytes.

## Description

The present invention relates to novel cluster compounds comprising one or more types of transition metals for use in electrochemical applications, particularly for use in aqueous redox flow batteries.

### Technical background

Using renewable energies such as solar and wind requires an energy management that contains energy storage capabilities. Redox flow batteries (RFBs) are an option that can be used in decentralized as well as in centralized systems. RFBs are the only type of battery in which the energy content and the power output can be scaled independently, offering a high flexibility for applications such as load levelling and frequency stabilization.

The current technology, the all-vanadium RFB, has clear advantages but suffers from distinct problems, the low energy density (about 20 times lower than Li-ion batteries) and low specific power density which requires high surface area felt electrodes to mitigate this problem. Complex compounds, such as cluster compounds, with multiple redox centers (for higher energy density) and high rates of electron transfer (for high power density) could provide an alternative approach to this established system. These complex compounds necessitate, however, profound chemical tailoring and redesign of electrolyte compositions.

Redox flow batteries have thus emerged as a compelling solution for large-scale energy storage applications. These systems are particularly well-suited for grid-level energy storage, renewable energy integration, and applications demanding longduration energy storage capabilities. At their core, RFBs operate based on reversible electrochemical reactions involving redox-active species, which are dissolved in separate electrolyte solutions (catholyte and anolyte). These redox reactions facilitate the storage and release of electrical energy, making RFBs a versatile and attractive technology for various energy storage needs.

Conventional redox flow batteries predominantly employ organic molecules or metal complexes as redox-active species. These materials are carefully selected based on their redox properties, solubility, and stability within the electrolyte solutions. While significant advancements have been made in RFB technology, several challenges continue to hinder their broader adoption and optimization.

One key challenge is the limited availability of redox-active materials that can meet the stringent requirements of RFBs. Current systems often suffer from issues such as low energy density, rapid capacity fade, and difficulties in scaling up to meet the needs of grid-scale applications. In particular, the energy density of conventional RFBs is often constrained by the molecular size and mass transport limitations of the redox-active species, impeding their ability to store substantial energy efficiently.

Moreover, the long-term stability of redox-active materials under the harsh electrochemical conditions experienced in RFBs remains a concern, as degradation of these materials can lead to decreased performance and shortened cycle life.

The incorporation of cluster compounds could be considered as a solution to insufficient energy density due to the plurality of charges that can be carried by such compounds.

While cluster compounds can exhibit remarkable energy density, as they contain multiple redox-active centers within a single molecule, there are drawbacks associated with such compounds that preclude industrial applicability of said compounds. Specifically, due to poor solubility of such compounds, correlates directly with lowered energy density of electrolytes comprising such compounds as charge carriers.

CN 115275292 A discloses an aqueous organic flow battery based on a vanadium-based organic cluster molecule aqueous solution, and belongs to the field of organic flow batteries, the aqueous organic flow battery based on the vanadium-based organic cluster molecule aqueous solution is characterized in that vanadyl sulfate is used as a raw material, and organic cluster molecules containing vanadium atoms are synthesized through a hydrothermal reaction; the molecular weight of the vanadium-based organic cluster molecule is 2876, the potential is 1.0 V, and the vanadium-based organic cluster molecule can be used as a positive electrode material of an aqueous flow battery; a phosphotungstic acid cluster molecule with the potential of 0.2 V is selected as a negative electrode material, and the molecular weight of the phosphotungstic acid cluster molecule is 2880; the solubility of the two cluster molecules in a sulfuric acid aqueous solution is high, the two cluster molecules can be respectively prepared into redox electrolytes of a positive electrode and a negative electrode, the cross contamination problem of the electrolytes of the positive electrode and the negative electrode can be effectively solved by utilizing the size exclusion effect, and meanwhile, the overall device cost of the flow battery is greatly reduced.

US 2014/0370405 (A1) discloses a non-aqueous redox flow battery comprising a negative electrode immersed in a non-aqueous liquid negative electrolyte, a positive electrode immersed in a non-aqueous liquid positive electrolyte, and a cation-permeable separator (e.g., a porous membrane, film, sheet, or panel) between the negative electrolyte from the positive electrolyte, wherein during charging and discharging, the electrolytes are circulated over their respective electrodes, wherein the electrolytes each comprise an electrolyte salt (e.g., a lithium or sodium salt), a transition-metal free redox reactant, and optionally an electrochemically stable organic solvent, wherein each redox reactant is selected from an organic compound comprising a conjugated unsaturated moiety, a boron cluster compound, and a combination thereof, wherein the organic redox reactant of the positive electrolyte comprises a tetrafluorohydroquinone ether compound or a tetrafluorocatechol ether compound.

The article "Organic Functionalization of Polyoxovanadate-alkoxide Clusters: Improving the Solubility of Multimetallic Charge Carriers for Nonaqueous Redox Flow Batteries" by VanGelder et al. (published in ChemSusChem, 2018) discloses the development of multimetallic charge carriers, with the report of high yielding syntheses of etherfunctionalized polyoxovanadate-alkoxide clusters, [V₆O₇(OR)₉-(OCH₂)₃CR'], R = CH₃, C₂H₅; R' = CH₃, CH2OCH3, CH₂OC₂H₄OCH, wherein these clusters exhibit four redox events, spanning nearly a two-volt window, and demonstrate rapid electron-transfer kinetics, wherein the ethoxide derivatives are able to reversibly cycle two electrons at each electrode in symmetric charging schematics, demonstrating long-term solution stability, wherein ether-functionalization yields a twelvefold increase in solubility, a factor which directly dictates the energy density of a redox flow battery.

### Summary of the invention

The inventors have realized the need for an improved cluster compounds, wherein, in particular, the energy density of electrolytes comprising said compounds is increased and the increased charge carrier properties of multi-charged clusters can be fully utilized.

In one aspect according to the present disclosure, there is provided a cluster comprising
a (charged or non-charged) complex, and
optionally a plurality of counterions (to fully or partially compensate the charge of the ion),
the (charged or non-charged) complex comprising metal atoms M and one or more types of ligands selected from formula (I), thereof: 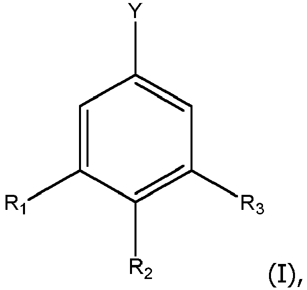 wherein each of the metal atoms M is independently selected from the group consisting of Mn, Fe, Co, Cr, V, Cu, Ni, and Zn, Y is selected from the group consisting of COOH, SO₃H, COO⁻, and SO₃⁻, R₁ is selected from the group consisting of H, OH, NH₂, COOH, SO₃H, COO⁻, and SO₃⁻, R₂ is selected from the group consisting of H, OH, NH₂, COOH, SO₃H, COO⁻, and SO₃⁻, R₃ is selected from the group consisting of H, OH, NH₂, COOH, SO₃H, COO⁻, and SO₃⁻; and characterized in that at least one of R₁, R₂, and R₃ is selected from the group consisting of NH₂, COOH, SO₃H, COO⁻, and SO₃⁻.

As mentioned above, the cluster compound can comprise (or be) a non-charged or charged complex. Whether or not the cluster is charged depends on the charge of all metal atoms M and the coordinating ligands and, if present, oxygen anions comprised by the cluster compound. If the charge of all metal atoms M and the coordinating ligands comprised by the cluster compound compensate each other, the overall complex is non-charged and no counterions for compensation of charges are needed. If the total charge of all metal atoms M is not compensated by the coordinating ligands comprised by the cluster compound, the positive or negative overall charge can be compensated by counterions. In addition to the organic ligands, oxygen atoms, solvents such as water or organic solvent molecules can be part of the cluster compound.

In a further aspect according to the present disclosure there is provided synthesis of the cluster compound according to any one of claims 1 to 11, wherein the synthesis comprises:
a1) providing cluster compound C comprising dihydroxybenzoic acid and metal atoms M selected the group consisting of Mn, Fe, Co, Cr, V, Cu, Ni, and Zn, or
a2) providing acetate salt of metals selected from the group consisting of Mn, Fe, Co, Cr, V, Cu, Ni, and Zn, adding an oxidation agent and dihydroxybenzoic acid (DHBA),
b) performing a ligand exchange reaction of the compound C using a ligand of formula (I), an anion or a salt thereof: 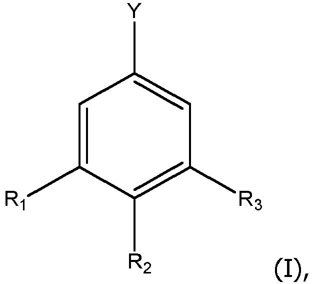 wherein
Y is selected from the group consisting of COOH, SO₃H, COO⁻, and SO₃⁻,
R₁ is selected from the group consisting of H, OH, NH₂, COOH, SO₃H, COO⁻, and
SO₃⁻, R₂ is selected from the group consisting of H, OH, NH₂, COOH, SO₃H, COO⁻, and SO₃⁻, R₃ is selected from the group consisting of H, OH, NH₂, COOH, SO₃H, COO⁻, and SO₃⁻; and characterized in that at least one of R₁, R₂, R₃ is selected from the group consisting of NH₂, COOH, SO₃H, COO⁻, and SO₃⁻.

In a further aspect according to the present disclosure there is provided an electrolyte solution comprising a cluster compound as defined the claims or a salt thereof in a concentration ranging from 0.01 to 5 M, preferred ranging from 0.1 to 2 M, further preferred from 0.5 to 1.5 M.

In a further aspect according to the present disclosure there is provided the use of the cluster compound as defined in the claims, or of the electrolyte solution according to any one of claims 16 to 18 in a redox flow battery, photocatalysis or medical applications.

In a further aspect according to the present disclosure there is provided a redox flow battery comprising the cluster compound as defined in the claims or of the electrolyte solution as defined in the claims.

### Figure description

Figure 1 shows an IR spectrum of the sodium salt of the m-sulfobenzoate ligand.
Figure 2 shows an IR spectrum of the Mn₁₂-cluster with the m-sulfobenzoate ligand via the two-step synthesis.
Figure 3 shows a comparison between the IR spectra of Mn₁₂-m-SBA (m-SBA = m-sulfobenzoate) from the two-step synthesis (solid line) and of the free m-SBA ligand (dotted line)
Figure 4 shows an IR spectrum of the Mn₁₂-cluster with the m-sulfobenzoate ligand via the one-pot synthetic approach.
Figure 5 shows a comparison between the IR spectra of Mn12-m-SBA from the two-step synthesis (solid line) and from the one-pot synthesis (dotted line).
Figure 6 shows an IR spectrum of the sodium salt of the 5-hydroxy isophthalic acid ligand.
Figure 7 shows an IR spectrum of the Mn₁₂-cluster with the 5-hydroxy isophthalate ligand via the two-step synthesis.
Figure 8 shows a comparison between the IR spectra of Mn₁₂-OH-isophthalate (solid line) and of the free 5-hydroxy isophthalic ligand (dotted line).
Figure 9 shows an IR spectrum of the potassium salt of the p-sulfobenzoate ligand.
Figure 10 shows an IR spectrum of the Mn₁₂-cluster with the p-sulfobenzoate ligand via the two-step synthesis.
Figure 11 shows a comparison between the IR spectra of Mn₁₂-m-SBA from the two-step synthesis (solid line) and of the free m-SBA ligand (dotted line).
Figure 12 shows a cyclic voltammogram of 10mM Mn₁₂-m-SBA in 0.3M Na₂SO₄ with the scan rate of 100 mV/s for 100 cycles.
Figure 13 shows a cyclic voltammogram of 5 mM Mniz in 1M Na₂SO₄ with the scan rate of 100 mV/s, and different potential window from -0.33 to 1.67 vs standard hydrogen electrode (S.H.E).
Figure 14 shows a cyclic voltammogram of 5 mM Mniz-OH-isophthalate in 1M Na₂SO₄ with the scan rate of 100 mV/s, and different potential window from -0.33 to 1.67 vs S.H.E.

### Detailed description of the invention

Surprisingly, the present inventors found that cluster compounds comprising a charged or non-charged complex, and optionally a plurality of counterions, which comprises metal atoms M and one or more types of ligands, wherein the ligand comprises a ligand of general formula (I) as defined in the claims, can surprisingly provide electrolyte solutions having significantly increased solubility and thus improved viscosity while providing high density. Examples 1 to 5 show the physical and electrochemical properties of the cluster compounds of the present invention when provided as charge carriers in electrolyte solutions.

The term "cluster compound" as used herein refers to a substance having the components as defined in the claims. The substance can comprise a plurality of atoms, ions, complexes, molecules etc. The components of the substance can be geometrically arranged and coordinated via one or more of electrostatic interactions, covalent bonds, H-bridging bonds etc. That is, cluster compound can refer to an ensemble of bound atoms intermediate in size between a molecule and a bulk solid. Clusters usually include a variety of stabilizing ligands in addition to the "naked" cluster core, which is an ion as defined in the claims. Cluster compound can thus refer to a molecule or compound that consists of a group of atoms, typically metal atoms, bonded together in a discrete and well-defined cluster. These clusters can be composed of a few to several dozen atoms and exhibit unique structural, electronic, and chemical properties. Cluster compounds thus include cluster complexes, metal cluster, molecular cluster, metalloid cluster, polyhedral cluster. If the cluster compound is in a dissolved or solid state, two or more cluster compounds can interact with each other/bind to each other, e.g. by Van-der-Waals forces.

A cluster compound as referred to herein can thus be a molecular entity composed of multiple atoms, usually metal atoms, bonded together in a specific arrangement, exhibiting distinctive properties and reactivity compared to individual atoms or simple compounds. These clusters can adopt three-dimensional structures with well-defined bonding patterns.

A cluster compound thus refers to a structure formed by the coordination of metal atoms that can be arranged as a (polyhedral, optionally tetrahedral) core, optional with further metal atoms of the same or a different type and/or the same or a different charge as the atoms of the core, optionally arranged in a ring-structure around the periphery of the core, and ligands of formula (I) which are coordinating the metal atoms (of core and/or periphery). The resulting structure can contain several metal centers connected by bridging ligands.

The term "complex" as used herein refers to a compound that is formed by one or more metal atoms (preferably ions) which is/are coordinated by one or more surrounding (charged or uncharged) ligands. Ligands are molecules or ions that donate pairs of electrons to the central metal, resulting in the formation of coordinate covalent bonds (with the one or more metal atoms and optionally with other ligands). Furthermore, a coordinative bond can comprise a backbonding (such as n backbonding) between metal and ligand. The ligands can furthermore interact via van der Waals or electrostatic (ionic) forces with a surrounding media. The complex can be uncharged or charged, i.e. in the form of an ion.

The term "ion" as used herein refers to a particle (atom, molecule, complex) that carries an electric charge due to the gain or loss of electrons. The term "ions" can include cations which are positively charged ions formed by electron loss, as well as anions, which are negatively charged ions formed by electron gain. Ions can carry a single charge or a plurality or charges. The charge of an ion can vary depending in the chemical, electrochemical and electronic environment. The charge can be localized (centered) at the charged ion or can be delocalized from the ion to further atoms or ions in proximity and/or interaction with the charged ion.

The term "counterion" as used herein similarly refers to a particle (atom, molecule, complex) that carries an electric charge due to the gain or loss of electrons. The term "counterion" can include cations which are positively charged ions formed by electron loss, as well as anions, which are negatively charged ions formed by electron gain. Counterions can carry a single charge or a plurality or charges. The charge of an ion can vary depending in the chemical, electrochemical and electronic environment. The charge can be localized (centered) at the charged counterion or can be delocalized from the ion to further atoms or ions in proximity and/or interaction with the charged counterion. The counterions according to the present disclosure carry a charge (or at least a partial charge) that is opposite to the charge of the ion. That is, if the ion is positively charged, the counterion carries at least a partial negative charge, preferred, the counterions is negatively charged.

The term "plurality" as used herein refers to a number greater than 1, such as 2 to 200, 2 to 100, 2 to 80, 2 to 70, 2 to 60, 2 to 50, 2 to 42, 2 to 36, 2 to 32, 2 to 30, 2 to 28.

The term "ligand" as used herein refers to a molecule or ion or a mixture of molecules or ions that can bind to a central metal atom or ion to form a coordination complex. The concept of ligands is fundamental to coordination chemistry, and it plays a crucial role in various chemical and biological processes. Ligands can vary widely in structure and size, and they can donate one or more pairs of electrons to the metal center to form coordinate covalent bonds. As discussed above, via n backbonding, metal atoms can donate n electrons to the ligand(s). This binding of ligands to metal ions or atoms results in the formation of complex compounds with distinct chemical and physical properties. A "ligand" is thus a molecular entity, which can include molecules or ions, that possesses the ability to bind to a central metal atom or ion through the donation of one or more pairs of electrons.

In some embodiments, the complex comprises oxygen anions and/or Y is COOH, or COO⁻, and at least one of R₁, R₂, and R₃ is COOH or COO⁻, or wherein Y is COOH or COO⁻, and at least one of R₁, R₂, and R₃ is SO₃H or SO₃⁻. During the synthesis of the cluster compounds as defined in the claims, in particular during the synthesis of compounds having ligands of formulae (Ia) to (Ie), indications have been found that the compounds according to the present invention exhibit high solubility in aqueous media and can thus allow for providing electrolytes having high charge density.

In some embodiments, Y is COOH or COO⁻, one of R₁, R₂, and R₃ is COOH or COO⁻, and one of R₁, R₂, and R₃ is selected from the group consisting of OH, NH₂, SO₃H, SO₃⁻.

In some embodiments, the cluster compound comprises from 3 to 21 metal atoms M, preferred from 6 to 18 metal atoms M, preferred from 8 to 14 metal atoms M, further preferred 12 metal atoms M; and/or wherein the cluster contains 0.5-2 ligands of formula (I) per metal atom M. Clusters according to the present invention can exhibit a wide range of structures, and the specific structures depending on the types of metal atoms, their arrangement, and the conditions under which they are formed. Structures that can be formed thus include but are not limited to cuboctahedral cluster (particularly, with 12 metal atoms): This cluster consists of a central metal atom or ion surrounded by eight metal atoms at the corners of a cube and three additional metal atoms on the faces of the cube. It forms a structure resembling a cuboctahedron. Further structures include octahedral structures, icosahedral structures, cubane structures, decahedral structures.

In some embodiments, the metal atoms M of the cluster compound are independently Mn, Fe, and combinations (mixtures) thereof, the metal atoms M of the cluster compound are preferred independently selected from Mn and Fe. While all transition metals can be suitable to be employed in the cluster compound according to the present invention, each of the metal atoms M is independently selected from the group consisting of Mn, Fe, Co, Cr, V, Cu, Ni, and Zn as defined in the claims. In preferred embodiments, each of the metal atoms M is Mn, Fe or a mixture thereof. Mn, Fe as well as mixtures thereof provide the cluster compound with high charge density due to the multiple charges that can be carried by the metal atoms/respective cations. Redox states of the Fe that can be realized within the cluster compound according to the present invention thus include Fe, Fe²⁺, Fe³⁺, as well as intermediary Fe⁴⁺, Fe⁵⁺, Fe⁶⁺. Redox states of the Mn that can be realized within the cluster compound according to the present invention thus include Mn, Mn ²⁺, Mn ³⁺, as well as Mn⁴⁺, Mn⁵⁺, Mn⁶⁺, Mn⁷⁺.

In some embodiments, the ligand of formula (I) is selected from the group consisting of one or more of ligands of (Ia) to (Ie), anions or salts thereof, or mixtures thereof:

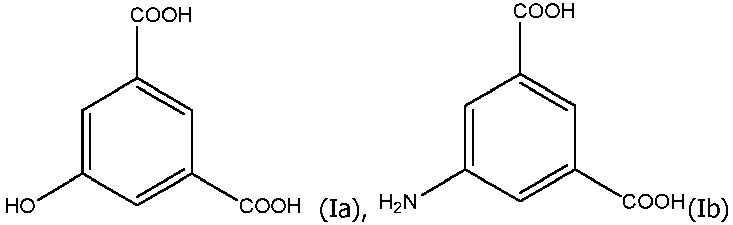

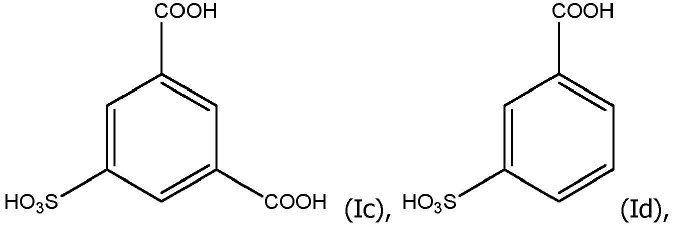

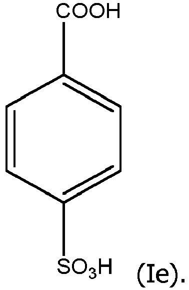

In some embodiments, wherein the cluster compound has the general formula (Mn/Fe)ₓO_{y}(Ia/Ib/Ic/Id/Ie)_{z}(H₂O)ₐ, wherein
a. x is an integer selected from the range of 3 to 21, preferred selected from the range of 6 to 18,
b. y is an integer selected from the range of 3 to 21, preferred selected from the range of 6 to 18,
c. z is an integer selected from 4 the range of to 24, preferred from the range of 6 to 16
d. a is an integer selected from the range of 1 to 8, preferred from the range of 2 to 6.

In further preferred embodiments, the cluster compound has the general formula Mn₁₂O₁₂(Ia/Ib/Ic/Id/Ie)₁₆(H₂O)₄.

In some embodiments, the cluster compound has a thermal stability of from 10 °C to 80 °C, preferred of from 20 °C to 60 °C, and/or wherein the cluster compound is stable in aqueous solution having a pH of from pH = 3 to pH = 9.

In some embodiments, the cluster compound can be synthesized in an aqueous solution, preferred in a mixture comprising water and acetonitrile, further optionally comprising an alcohol, or in a solvent consisting essentially of water.

In some embodiments, the cluster comprises an inorganic metal-oxygen core and an organic periphery of ligands of the general structure (I). The inorganic metal-oxygen core is formed by said metal atoms M and oxygen anions.

In some embodiments, the inorganic metal-oxygen core is an (Fe/Mn)₁₂-O₁₂ core, optionally an Fe₁₂-O₁₂ or Mn₁₂-O₁₂ core.

In a further aspect according to the present disclosure, there is provided the synthesis of the cluster compound according to any one of claims 1 to 11, wherein the synthesis comprises:
a1) providing cluster compound C comprising dihydroxybenzoic acid and metal atoms M selected the group consisting of Mn, Fe, Co, Cr, V, Cu, Ni, and Zn, or
a2) providing acetate salt of metals selected from the group consisting of Mn, Fe, Co, Cr, V, Cu, Ni, and Zn, adding an oxidation agent and dihydroxybenzoic acid (DHBA),
b) performing a ligand exchange reaction of the compound C using a ligand of formula (I), an anion or a salt thereof: 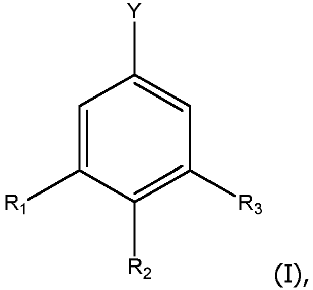 wherein
Y is selected from the group consisting of COOH, SO₃H, COO⁻, and SO₃⁻,
R₁ is selected from the group consisting of H, OH, NH₂, COOH, SO₃H, COO⁻, and
SO₃⁻, R₂ is selected from the group consisting of H, OH, NH₂, COOH, SO₃H, COO⁻, and SO₃⁻, R₃ is selected from the group consisting of H, OH, NH₂, COOH, SO₃H, COO⁻, and SO₃⁻; and characterized in that at least one of R₁, R₂, R₃ is selected from the group consisting of NH₂, COOH, SO₃H, COO⁻, and SO₃⁻.

In some embodiments, the step of performing a ligand exchange reaction comprises suspending the compound of formula (I) in a solvent, the solvent is comprising preferred MeOH or a mixture of MeCN and HzO.

In some embodiments, the step of performing a ligand exchange reaction is performed at a temperature ranging from 10 °C to 60 °C, 20 °C to 40 °C, preferred at a temperature ranging from 20 to 25 °C, for a time ranging from 6 hours to 72 hours, preferred 6 hours to 48 hours, preferred ranging from 12 hours to 24 hours, further preferred about 18 hours.

In some embodiments, the compound C has the general formula MₓO_{y}(L)_{z}(H₂O)ₐ, wherein x is an integer selected from 3 to 21, preferred selected from 6 to 18, y is an integer selected from 3 to 21, preferred selected from 6 to 18, z is an integer selected from 4 to 24, preferred selected from 6 to 16, a is an integer selected from 1 to 8, preferred selected from 2 to 6, L is a carboxylate ligand, further preferred the cluster compound has the general formula Mn₁₂O₁₂(DHBA)₁₆(H₂O)₄.

In a further aspect according to the present disclosure, there is provided an electrolyte solution comprising a cluster compound as defined in the claims or a salt thereof in a concentration ranging from 0.01 to 5 M, preferred ranging from 0.1 to 2 M, further preferred from 0.5 to 1.5 M.

In some embodiments, the solution has a pH value ranging from 2 to 10, preferred ranging from 3 to 8, further preferred ranging from 4 to 6.

In some embodiments, the electrolyte solution has a viscosity of from 1 mPa/s to 2 mPa/s, preferred of from 1.6 mPa/s to 1.9 mPa/s, measured at 25 °C using Ostwald viscometer.

In a further aspect according to the present disclosure, there is provided the use of the cluster compound as defined in the claims, or of the electrolyte solution as defined in the claims in a redox flow battery, photocatalysis or medical applications. Medical applications according to the present invention refer to the cluster compound (or electrolyte) as defined in the claims for use in the treatment and/or diagnosis of specific diseases. The present invention thus refers to the use of the cluster compounds as well as the electrolyte comprising the cluster compound in redox flow applications (e.g. battery), and in photocatalysis. The present invention thus also refers to the cluster compound and/or electrolyte comprising the cluster compound for use in the treatment and/or diagnosis of specific diseases. The medical application according to the present invention thus can include targeted disinfection by employing the cluster compounds, the delivery and release of active agents/drugs (i.e. acting as nanocarriers).

Cluster compounds, particularly those containing transition metals as defined in the claims, have found applications in the field of photocatalysis and medical applications due to their unique properties and reactivity. Photocatalysis can involve using light-activated catalysts to trigger chemical reactions for various medical applications, such as disinfection, drug delivery, and diagnostic assays.

Cluster compounds can serve as efficient photocatalysts, initiating chemical reactions when exposed to light. They absorb light energy and promote electron transfer, creating reactive species that can participate in various photochemical processes.

Medical application and also photocatalysis using cluster compounds can be applied in disinfection and antimicrobial processes. For instance, metal cluster compounds, like silver clusters or semiconductor nanoclusters, can be used as photocatalysts to generate reactive oxygen species (ROS) such as hydroxyl radicals (•OH) under light irradiation. These ROS possess strong antibacterial properties and can be used for sterilization of medical equipment or surfaces in healthcare settings.

Cluster compounds can be incorporated into drug delivery systems for controlled release of therapeutic agents. By modifying the surface properties of clusters, researchers can attach drugs or therapeutic molecules. When exposed to light, the photocatalytic activity of the cluster can be harnessed to release the drug in a controlled and targeted manner. This is particularly useful for precision medicine and cancer treatment.

Cluster compounds have been explored in photodynamic therapy, a medical treatment that utilizes light-activated substances to destroy malignant cells. Certain cluster compounds, when exposed to light, can generate singlet oxygen (¹O₂), a highly reactive species that damages cancer cells. This approach minimizes collateral damage to surrounding healthy tissues and is a promising avenue for cancer treatment.

Cluster compounds can be used in diagnostic assays based on the detection of lightinduced changes in properties. For instance, they can serve as probes or labels in assays, such as fluorescence or luminescence-based tests for the detection of biomarkers or pathogens. The binding or reaction of cluster compounds with specific target molecules can be monitored through changes in their spectroscopic properties when exposed to light.

Nanoscale cluster compounds can be used to create photoactive nanoparticles. These nanoparticles can be designed to target specific tissues or cells. When activated by light, they can generate reactive species, facilitating drug release or therapeutic actions with high precision.

The controlled and targeted nature of cluster compounds in medical applications using cluster compounds as defined in the claims can lead to reduced side effects and improved patient outcomes. By directing therapeutic action only where it is needed, cluster-based photocatalysis minimizes collateral damage to healthy tissues and reduces the risk of adverse reactions.

The cluster compounds can be used for photocatalytic applications. Photocatalysis is a process that uses light energy to initiate chemical reactions. Cluster compounds, according to the present invention, can be used as photocatalysts in a variety of applications. Including water splitting for hydrogen production: Cluster compounds, particularly metal-oxide clusters, can serve as photocatalysts for the splitting of water into hydrogen and oxygen. This is a key reaction for renewable hydrogen production, which can be used as a clean fuel source. Air and water purification: Photocatalytic cluster compounds, can be used to degrade and remove organic pollutants and pathogens from air and water when exposed to UV or visible light. They can help in wastewater treatment and air purification processes. Carbon dioxide reduction: Some cluster compounds can catalyze the reduction of carbon dioxide into useful chemical feedstocks or fuels like methane, methanol, or formic acid. Synthetic chemistry: Cluster compounds can be used as photocatalysts in synthetic chemistry to facilitate specific reactions. They can initiate reactions that are challenging under standard conditions, expanding the toolbox of synthetic chemists. Self-Cleaning surfaces: Certain cluster compounds can be coated onto surfaces, such as glass or tiles, to create self-cleaning materials. When exposed to light, these surfaces can break down and remove organic contaminants, reducing the need for manual cleaning.

In a further aspect according to the present disclosure, there is provided a redox flow battery comprising the cluster compound as defined in the claims or of the electrolyte solution as defined in the claims. Redox flow batteries according to the present invention can comprise one or more redox battery unit cell which comprise a first electrode, a second electrode spaced apart from the first electrode, and a membrane arranged between the first and the second electrode, wherein the first electrode optionally comprises a first flow field, and wherein the cluster compound or the electrolyte as defined in the claims is used for charge storage/transfer.

In this aspect, the redox battery unit cell comprises a first electrode, a second electrode which is spaced apart from the first electrode and a membrane arranged between the first and the second electrode. The term "electrode" as used herein generally refers to a physical object (such as a solid or fluid) capable of taking an electric current to or from a source of power. That is, the term "electrode" as used herein can refer to an electron-providing or electron-removing, i.e. an electron-conducting solid but also to an electron-conducting fluid. The redox battery unit cell as defined in claim 1 can thus be characterized in that the first electrode and the second electrode both comprise solid structures. The redox battery unit cell as defined in claim 1 can thus alternatively be characterized in that the first electrode comprises a solid structure and wherein the second electrode comprises a fluid, such as a gas (preferred comprising air and/or oxygen) in contact with a second solid (e.g. metal) electrode. That is, if the second electrode comprises for example oxygen, the oxygen can participate in an electrochemical reaction with protons provided via the membrane and electrons provided via the charge collector to the second solid electrode in a two-electron process producing water. Optionally, the second electrode consists of a fluid, such as a gas, preferred of air and a second solid electrode in contact with the fluid. That is, the electrons provided from the first electrode during discharging can react with a fluid or a gas at the second electrode.

The second electrode is spaced apart from the first electrode such that short-circuit faults and tunneling current are avoided. That is, the second electrode is not in direct contact with the first electrode but spatially separated from the first electrode. The first and second electrode can be spatially separated for example by a distance (inner electrode distance) of greater than 1 mm. For example, the inner electrode distance can be in the range from 1 mm to 1 cm, or from 2 mm to 100 mm, or from 4 mm to 50 mm. Preferably, the inner electrode distance is from 10 to 25 mm.

The first and second electrode are separated such that short-circuit faults and tunneling current are avoided. In addition to the spatial separation, the first and second electrode are furthermore separated by a membrane, which is arranged between the first and the second electrode. The membrane acts as (electronical) separator of the first and second electrode. The membrane allows transport of ionic charge carriers that are needed to close the circuit during the charging/discharging of the battery.

In some examples, the cell provides a current density ranging from 0.1 A/cm² to 10 A/cm², preferred ranging from 0.1 A/cm² to 5 A/cm², further preferred ranging from 0.5 A/cm² to 2 A/cm², depending on the type and amount/concentration of cluster compound employed in the redox flow battery.

### Figure description

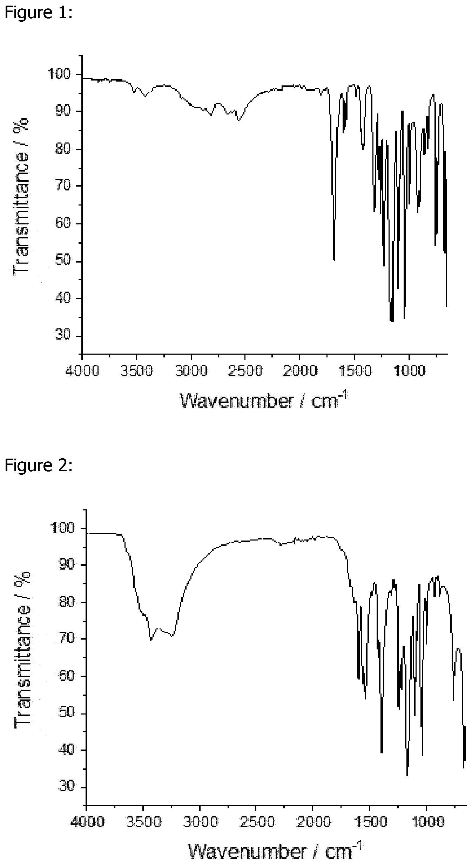

Figure 1 shows an IR spectrum of the sodium salt of the m-sulfobenzoate ligand.

Figure 2 shows an IR spectrum of the Mn₁₂-cluster with the m-sulfobenzoate ligand via the two-step synthesis.

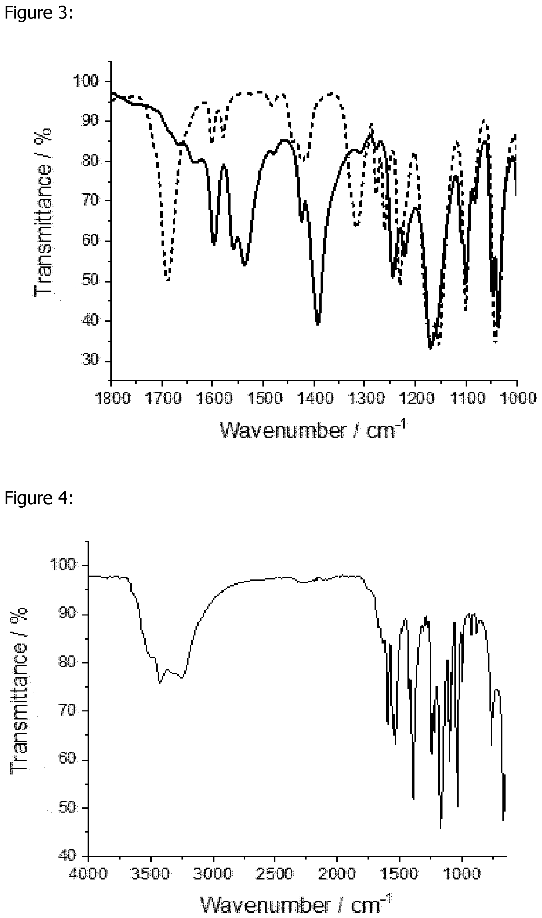

Figure 3 shows a comparison between the IR spectra of Mn₁₂-m-SBA from the two-step synthesis (solid line) and of the free m-SBA ligand (dotted line)
Figure 4 shows an IR spectrum of the Mn₁₂-cluster with the m-sulfobenzoate ligand via the one-pot synthetic approach.

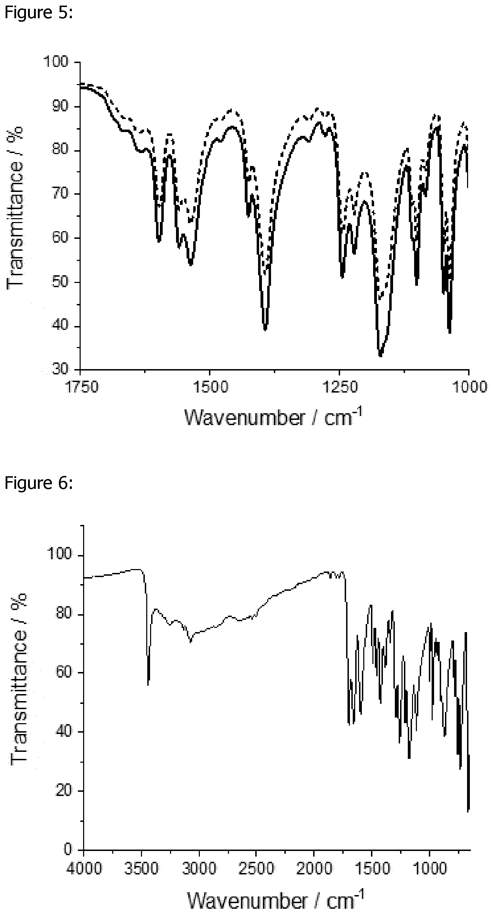

Figure 5 shows a comparison between the IR spectra of Mn12-m-SBA from the two-step synthesis (solid line) and from the one-pot synthesis (dotted line).

Figure 6 shows an IR spectrum of the sodium salt of the 5-hydroxy isophthalic acid ligand.

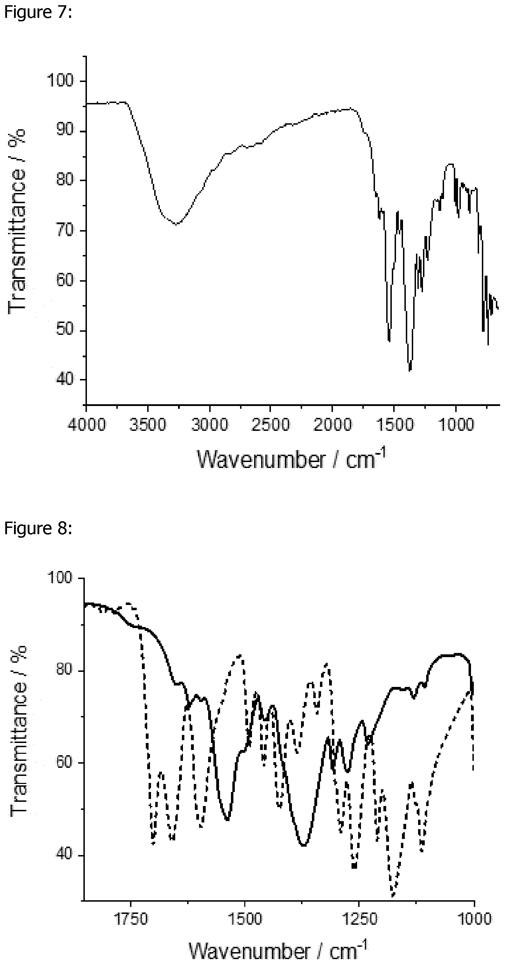

Figure 7 shows an IR spectrum of the Mn₁₂-cluster with the 5-hydroxy isophthalate ligand via the two-step synthesis.

Figure 8 shows a comparison between the IR spectra of Mn₁₂-OH-isophthalate (solid line) and of the free 5-hydroxy isophthalic ligand (dotted line).

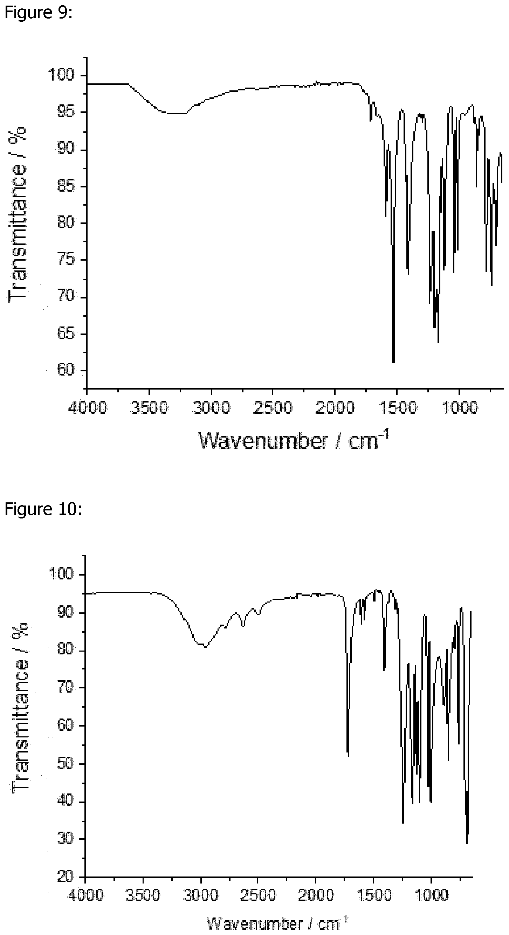

Figure 9 shows an IR spectrum of the potassium salt of the p-sulfobenzoate ligand.

Figure 10 shows an IR spectrum of the Mn₁₂-cluster with the p-sulfobenzoate ligand via the two-step synthesis.

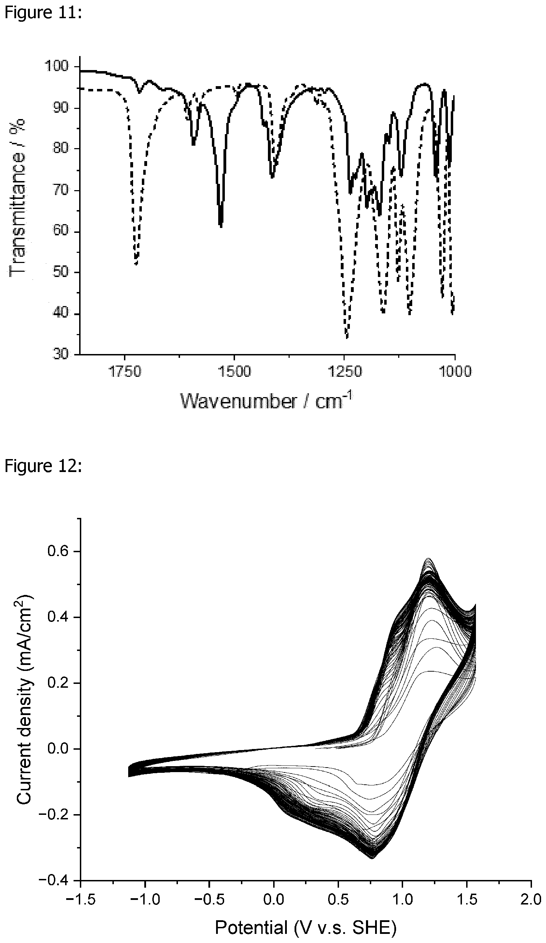

Figure 11 shows a comparison between the IR spectra of Mn₁₂-m-SBA from the two-step synthesis (solid line) and of the free m-SBA ligand (dotted line).

Figure 12 shows a cyclic voltammogram of 10mM Mn₁₂-m-SBA in 0.3M Na₂SO₄ with the scan rate of 100 mV/s for 100 cycles.

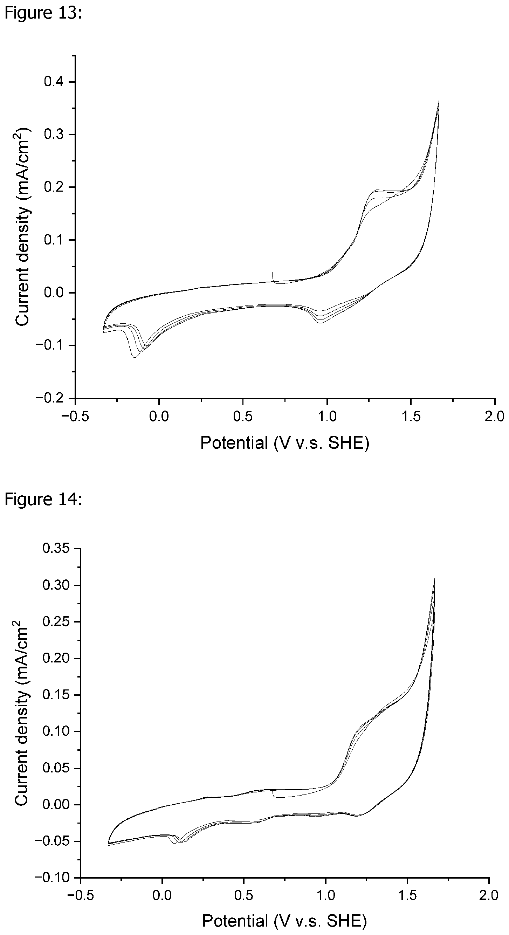

Figure 13 shows a cyclic voltammogram of 5 mM Mn₁₂ in 1M Na₂SO₄ with the scan rate of 100 mV/s, and different potential window from -0.33 to 1.67 vs S.H.E
Figure 14 shows a cyclic voltammogram of 5 mM Mn₁₂-OH-isophthalate in 1M Na₂SO₄ with the scan rate of 100 mV/s, and different potential window from -0.33 to 1.67 vs S.H.E.

### Examples

### Example 1 - Cluster synthesis and characterization

The modified Mn₁₂-clusters were synthesized via ligand exchange reactions using the Mn₁₂-DHBA (DHBA = dihydroxybenzoate) instead of Mn₁₂-OAc (OAc = acetate) due to the presence of water in the solvent mixtures, necessary to fully solubilize the chosen ligands. If the acetate-substituted cluster was used, the product could not be obtained, possibly due to decomposition via hydrolysis. The obtained products were characterized via IR-spectroscopy, cyclic voltammetry, and elemental analysis.

### Example 2 - Synthesis of Mn₁₂-m-SBA (m-SBA = m-sulfobenzoate)

The ligand exchange was followed by means of IR-spectroscopy. The full spectra of the free ligand and of the Mn₁₂-cluster can be found in Figures 1 and 2. In Figure 3, a section of the spectrum of the free ligand is compared to the spectrum of the Mn₁₂-cluster. As depicted, the disappearance of the broad band centred at 2500 cm⁻¹, characteristic of carboxylic acids, supports the deprotonation of the ligand. In the region between 1800 - 1000 cm⁻¹, the carboxylic acid deprotonation and coordination to the manganate cluster can be evaluated. The band at 1690 cm⁻¹ for the free carboxylic acid cannot be observed in the isolated product. Moreover, the typical carboxylate absorptions for the asymmetric and symmetric vibrations are found at 1540 and 1390 cm⁻¹, respectively. The sulfonate groups can be tracked at 1150 cm⁻¹. As the band is not shifted after ligand exchange, it is expected these groups to be pointing outwards, i.e., building the negative shell around the oxo-cluster. Furthermore, no absorption related to the DHBA ligand can be observed in the product.

To evaluate the one-pot approach, the IR spectrum of the isolate Mn₁₂-product was recorded and is presented in Figure 4. A comparison to the two-step product is shown in Figure 5. As observed, the IR spectrum of the one-pot synthesis product is in very good agreement with the one recorded for the two-step synthesis.

### Example 3 - Synthesis of Mn₁₂-p-SBA (p-SBA = p-sulfobenzoate) and Mn₁₂-OH-isophthalate

The synthesis was extended to two more acids: p-sulfobenzoate potassium salt and 5-hydroxy isophthalic acid. Similarly, the successful ligand exchange was tracked by means of IR spectroscopy. The full spectra and comparisons between free and coordinated ligands are presented in Figures 6-11.

### Example 4 - Cyclic Voltammetry

The electrochemical properties were evaluated by means of cyclic voltammetry. As depicted in Figure 12, the Mn₁₂-m-SBA cluster shows a reversible process centred at 0.9 V, like the pattern observed for the reported Mn₁₂-DHBA. Additionally, it showed stability for 100 cycles, supporting its qualification as a catholyte material. Similar cyclic voltammograms were recorded for the other clusters. Figure 13 shows a cyclic voltammogram of 5 mM Mn₁₂ in 1M Na₂SO₄ with the scan rate of 100 mV/s, and different potential window from -0.33 to 1.67 vs S.H.E. Figure 14 shows a cyclic voltammogram of 5 mM Mn₁₂-OH-isophthalate in 1M Na₂SO₄ with the scan rate of 100 mV/s, and different potential window from -0.33 to 1.67 vs S.H.E.

### Example 5 - Aqueous solubility

The solubility of each cluster was determined in water and 1 M Na₂SO₄ solution - a typical supporting electrolyte. The solubility of the synthesized clusters is described in the following table:

| | Solubility in water / M | Solubility in 1 M Na₂SO₄ / M |
|---|---|---|
| Mn₁₂-mSBA-Na | 0.20 M | 0.22 M |
| Mn₁₂-DHBA | 0.10 M | 0.11 M |
| Mn₁₂-pSBA-K | 0.09 M | 0.11 M |
| Mn₁₂-OHisophthalic | 0.05 M | 0.05 M |

As depicted, the Mn₁₂-m-SBA clusters is two times more soluble than the reported Mn₁₂-DHBA. Change of the counter cation to K⁺ reduces the solubility, but the compound is virtually as soluble as the literature compound. The higher solubility of the Mn₁₂-m-SBA is extremely relevant since the energy density of the electrolyte is directly correlated to its solubility.

### Example 6 - Elemental Analysis

Elemental analysis of Mn₁₂ cluster compounds was performed in order to validate the chemical composition with expected values of C, H, S, Mn, and Na.

### Mn₁₂-m-SBA (two-step synthesis)

| | **Expected*** | **Experimental** |
|---|---|---|
| C | 29.93 | **31.24** |
| H | 1.61 | **2.42** |
| S | 11.42 | **10.08** |
| Mn | 14.67 | **14.1** |
| Na | 8.19 | **9.0** |

### Mn₁₂-m-SBA (one-pot synthesis)

| | **Expected*** | **Experimental** |
|---|---|---|
| C | 29.93 | **28.35** |
| H | 1.61 | **2.16** |
| S | 11.42 | **10.85** |
| Mn | 14.67 | **13.6** |
| Na | 8.19 | **8.8** |

| | | |
|---|---|---|
| *Expected values calculated for the formula C₁₁₂H₇₂O₉₆S₁₆Mn₁₂Na₁₆. **The observed differences are very likely related to co-crystallized solvent. | | |

## Claims

1. Cluster compound comprising
a charged or non-charged complex, and
optionally a plurality of counterions,
the complex comprising metal atoms M and one or more types of ligands selected from formula (I), thereof: 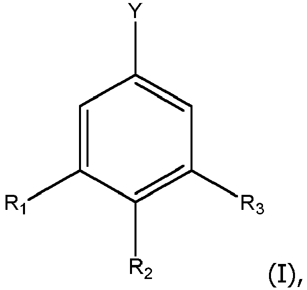 wherein
each of the metal atoms M is independently selected from the group consisting of Mn, Fe, Co, Cr, V, Cu, Ni, and Zn,
Y is selected from the group consisting of COOH, SO₃H, COO⁻, and SO₃⁻,
R₁ is selected from the group consisting of H, OH, NH₂, COOH, SO₃H, COO⁻, and SO₃⁻,
R₂ is selected from the group consisting of H, OH, NH₂, COOH, SO₃H, COO⁻, and SO₃⁻,
R₃ is selected from the group consisting of H, OH, NH₂, COOH, SO₃H, COO⁻, and SO₃⁻; and **characterized in that** at least one of R₁, R₂, and R₃ is selected from the group consisting of NH₂, COOH, SO₃H, COO⁻, and SO₃⁻.

2. Cluster compound according to claim 1, wherein
Y is COOH, or COO⁻, and
at least one of R₁, R₂, and R₃ is COOH or COO⁻, or wherein
Y is COOH or COO⁻, and
at least one of R₁, R₂, and R₃ is SO₃H or SO₃⁻.

3. Cluster compound according to claim 1 or claim 2, wherein the complex comprises oxygen anions and/or wherein
Y is COOH or COO⁻,
one of R₁, R₂, and R₃ is COOH or COO⁻, and one of R₁, R₂, and R₃ is selected from the group consisting of OH, NH₂, SO₃H, SO₃⁻.

4. Cluster compound according to any one of claims 1 to 3, wherein the cluster compound comprises from 3 to 21 metal atoms M, preferred from 6 to 18 metal atoms M, preferred from 8 to 14 metal atoms M, further preferred 12 metal atoms M; and/or wherein the cluster contains 0.5-2 ligands of formula (I) per metal atom M.

5. Cluster compound according to any one of claims 1 to 4, wherein the metal atoms M of the cluster compound are independently Mn, Fe, and combinations thereof, preferred the metal atoms M of the cluster compound are independently selected from Mn and Fe, and/or
wherein the ligand of formula (I) is selected from the group consisting of one or more of ligands of (Ia) to (Ie), anions or salts thereof, or mixtures thereof:

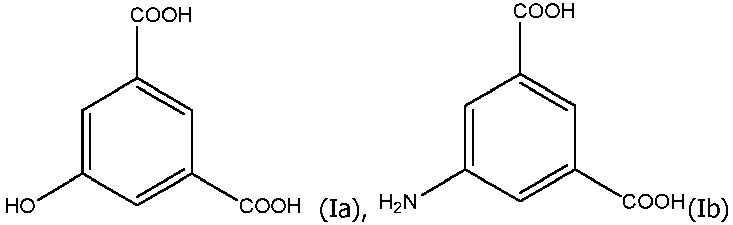

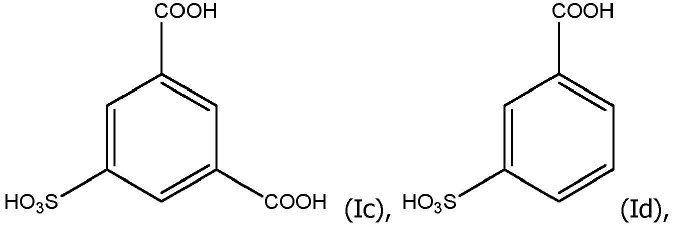

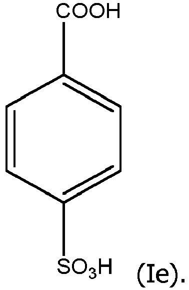

6. Cluster compound according to any one of claims 1 to 5, wherein the cluster compound has the general formula (Mn/Fe)ₓO_{y}(Ia/Ib/Ic/Id/Ie)_{z}(H₂O)ₐ, wherein
a. x is an integer selected from the range of 3 to 21, preferred selected from the range of 6 to 18,
b. y is an integer selected from the range of 3 to 21, preferred selected from the range of 6 to 18,
c. z is an integer selected from 4 the range of to 24, preferred from the range of 6 to 16
d. a is an integer selected from the range of 1 to 8, preferred from the range of 2 to 6;
further preferred the cluster compound has the general formula Mn₁₂O₁₂(Ia/Ib/Ic/Id/Ie)₁₆(H₂O)₄.

7. Cluster compound according to any one of claims 1 to 6, wherein the cluster compound has a thermal stability of from 10 °C to 80 °C, preferred of from 20 °C to 60 °C, and/or wherein the cluster compound is stable in aqueous solution having a pH of from pH = 3 to pH = 9, and/or
wherein the cluster compound can be synthesized in an aqueous solution, preferred
in a mixture comprising water and acetonitrile, further optionally comprising an alcohol, or
in a solvent consisting essentially of water.

8. Cluster compound according to any one of claims 1 to 7, wherein the cluster comprises an inorganic metal-oxygen core and an organic periphery of ligands of the general structure (I), optionally
wherein the inorganic metal-oxygen core is an (Fe/Mn)₁₂-O₁₂ core, optionally an Fe₁₂-O₁₂ or Mn₁₂-O₁₂ core.

9. Synthesis of the cluster compound according to any one of claims 1 to 8,
wherein the synthesis comprises:
a1) providing cluster compound C comprising dihydroxybenzoic acid and metal atoms M selected the group consisting of Mn, Fe, Co, Cr, V, Cu, Ni, and Zn, or
a2) providing acetate salt of metals selected from the group consisting of Mn, Fe, Co, Cr, V, Cu, Ni, and Zn, adding an oxidation agent and dihydroxybenzoic acid (DHBA),
b) performing a ligand exchange reaction of the compound C using a ligand of formula (I), an anion or a salt thereof: 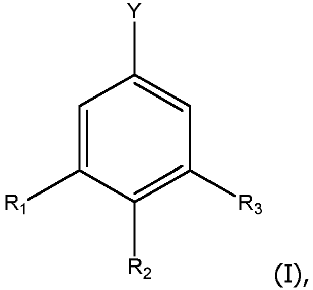 wherein
Y is selected from the group consisting of COOH, SO₃H, COO⁻, and SO₃⁻,
R₁ is selected from the group consisting of H, OH, NH₂, COOH, SO₃H, COO⁻, and SO₃⁻,
R₂ is selected from the group consisting of H, OH, NH₂, COOH, SO₃H, COO⁻, and SO₃⁻,
R₃ is selected from the group consisting of H, OH, NH₂, COOH, SO₃H, COO⁻, and SO₃⁻; and **characterized in that** at least one of R₁, R₂, R₃ is selected from the group consisting of NH₂, COOH, SO₃H, COO⁻, and SO₃⁻.

10. The synthesis according to claim 9, wherein the step of performing a ligand exchange reaction comprises suspending the compound of formula (I) in a solvent, the solvent is preferred comprising MeOH or a mixture of MeCN and HzO.

11. The synthesis according to claim 9 or 10, wherein the step of performing a ligand exchange reaction is performed at a temperature ranging from 10 °C to 60 °C, 20 °C to 40 °C, preferred at a temperature ranging from 20 to 25 °C, for a time ranging from 6 hours to 72 hours, preferred 6 hours to 48 hours, preferred ranging from 12 hours to 24 hours, further preferred about 18 hours, and/or
wherein the compound C has the general formula MₓO_{y}(L)_{z}(H₂O)ₐ,
wherein
a. x is an integer selected from 3 to 21, preferred selected from 6 to 18,
b. y is an integer selected from 3 to 21, preferred selected from 6 to 18,
c. z is an integer selected from 4 to 24, preferred selected from 6 to 16,
d. a is an integer selected from 1 to 8, preferred selected from 2 to 6,
e. L is a carboxylate ligand,
further preferred the cluster compound has the general formula Mn₁₂O₁₂(DHBA)₁₆(H₂O)₄.

12. Electrolyte solution comprising a cluster compound according to any one of claims 1 to 8 or a salt thereof in a concentration ranging from 0.01 to 5 M, preferred ranging from 0.1 to 2 M, further preferred from 0.5 to 1.5 M.

13. Electrolyte solution according to claim 12, wherein the solution has a pH value ranging from 2 to 10, preferred ranging from 3 to 8, further preferred ranging from 4 to 6, and/or
wherein the solution has a viscosity of from 1 mPa/s to 2 mPa/s, preferred of from 1.6 mPa/s to 1.9 mPa/s, measured at 25 °C using Ostwald viscometer.

14. Use of the cluster compound according to any one of claims 1 to 8, or of the electrolyte solution according to claim 12 or claim 13 in a redox flow battery, photocatalysis or medical applications.

15. Redox flow battery comprising the cluster compound according to any one of claims 1 to 8 or of the electrolyte solution according to claim 12 or claim 13.
